Europäisches Patentamt

(19) European Patent Office

Office européen des brevets

(11) Numéro de publication : **0 333 602 B1**

(12) **FASCICULE DE BREVET EUROPEEN**

(45) Date de publication du fascicule du brevet :
30.10.91 Bulletin 91/44

(51) Int. Cl.⁵ : **D04H 13/00, B29C 67/14**

(21) Numéro de dépôt : **89420075.7**

(22) Date de dépôt : **28.02.89**

(54) Armature textile utilisable pour la réalisation de complexes stratifiés et complexes stratifiés en forme comportant une telle armature.

(30) Priorité : 14.03.88 FR 8803482

(43) Date de publication de la demande :
20.09.89 Bulletin 89/38

(45) Mention de la délivrance du brevet :
30.10.91 Bulletin 91/44

(84) Etats contractants désignés :
BE CH DE ES GB IT LI SE

(56) Documents cités :
FR-A- 2 048 071
GB-A- 1 370 787
US-A- 3 044 146

(73) Titulaire : **ETABLISSEMENTS LES FILS D'AUGUSTE CHOMARAT & CIE. Société Anonyme**
**7, rue Roy**
**F-75008 Paris (FR)**

(72) Inventeur : **Chomarat, Gilbert**
**Route des Chavannes**
**F-74260 Les Gets (FR)**
Inventeur : **Lenglart, Jacques**
**9 route de Saint Jean Roure**
**F-07160 Le Cheylard (FR)**

(74) Mandataire : **Laurent, Michel et al**
**Cabinet LAURENT et CHARRAS, 20, rue Louis Chirpaz B.P. 32**
**F-69131 Ecully Cedex (FR)**

## Description

L'invention concerne un perfectionnement apporté aux armatures textiles utilisées pour la réalisation de complexes stratifiés, c'est-à-dire d'articles à base de résine (polyester ou autres), armés par une nappe textile de renforcement ; elle concerne également un nouveau type d'articles stratifiés en forme comportant une telle armature.

A ce jour, en fonction des applications et des caractéristiques recherchées, de très nombreuses structures textiles de renforcement sont utilisées dans le domaine des complexes stratifiés tels que par exemple tissus, grilles, textiles, non-tissés ou combinaisons de tels éléments.

Lorsque ces armatures sont constituées de différentes couches superposées, pour assurer la liaison des différentes couches entre elles, on utilise très souvent la technique dite "couture-tricotage". De tels complexes ressortent notamment des brevets français 1469065, 1095507, 2048071 et des brevets US 2890579 et 3044146.

Ces matériaux donnent satisfaction, notamment lorsque l'on souhaite réaliser des stratifiés plans. En revanche, lorsque l'on souhaite réaliser des stratifiés emboutis, soit ils présentent une résistance à la déformation trop importante lorsqu'ils comportent des renforts constitués de tissus, soit ils se déchirent ou se déforment de manière irrégulière lorsqu'ils sont à base de mat fibreux.

Pour résoudre ce problème, ainsi que cela ressort notamment des brevets français 2559099 et 2567807, il a été proposé d'utiliser des armatures à base de tissus ayant des contextures bien précises et qui sont complexes et délicats à réaliser.

Par ailleurs, de telles armatures tissées ne permettent pas d'avoir des renforts de forte épaisseur, ce qui est recherché pour certaines applications.

Or on a trouvé, et c'est ce qui fait l'objet de la présente invention un perfectionnement apporté aux armatures textiles comportant une pluralité de couches liées entre elles par couture-tricotage qui, non seulement permet de conserver les propriétés de telles structures (épaisseurs notamment), mais également présente la caractéristique de pouvoir être déformé facilement et ce, sans déchirure ni altération dans la répartition du mat fibreux que comportent de telles armatures.

Un tel matériau est particulièrement adapté pour réaliser des stratifiés emboutis de manière profonde tels que par exemple des casques ou articles similaires.

D'une manière générale, l'invention concerne donc un nouveau type d'armature textile utilisable pour la réalisation d'articles stratifiés, cette armature étant du type constitué par au moins une nappe de fibres disposées au hasard les unes par rapport aux autres, associée à une structure textile ordonnée, ces deux éléments étant liés entre eux par couture-tricotage et elle se caractérise en ce que :

— la nappe textile à base de fils ordonnés est constituée par un tricot déformable ;
— le liage est réalisé de telle sorte que les jetées sur une aiguille (côté colonnes de mailles) soient réalisées du côté du tricot alors que les jetées sous plusieurs aiguilles (flottés) sont, quant à elles, réalisés côté nappe fibreuse.

Avantageusement et en pratique, conformément à l'invention :

— le tricot est un tricot jersey réalisé sur un métier à mailles jetées ou à mailles cueillies ;
— le non-tissé et le tricot ainsi que les fils de liage peuvent être soit à base de matière similaire, soit à base de matières différentes ; selon une forme préférentielle de l'invention, le non-tissé est à base de fibres de verre ayant une longueur de coupe relativement importante (par exemple 110 mm de long), alors que le tricot ainsi que les fils de liage sont à base de fils synthétiques tels que par exemple de fils polyester ou polyamide.

Les matériaux conformes à l'invention sont particulièrement adaptés pour réaliser des articles stratifiés emboutis, tels que par exemple des casques. Ces articles, qui font également partie de l'invention se caractérisent en ce que, lors de leur réalisation, la face du tricot (jersey) est disposée du côté "poinçon" du moule, de telle sorte que dans le stratifié terminé, cet élément se trouve situé côté concave (à l'intérieur du casque par exemple). Bien entendu, pour d'autres applications, il pourrait être envisagé d'avoir la disposition inverse.

L'invention et les avantages qu'elle apporte seront cependant mieux compris grâce à l'exemple de réalisation donné ci-après à titre indicatif et non limitatif et qui est illustré par les deux figures annexées, figures dans lesquelles :

— la figure 1 est une vue en perspective éclatée d'un matériau conforme à l'invention ;
— la figure 2 illustre de manière schématique la mise en oeuvre d'un tel matériau pour la réalisation d'un article embouti (casque par exemple).

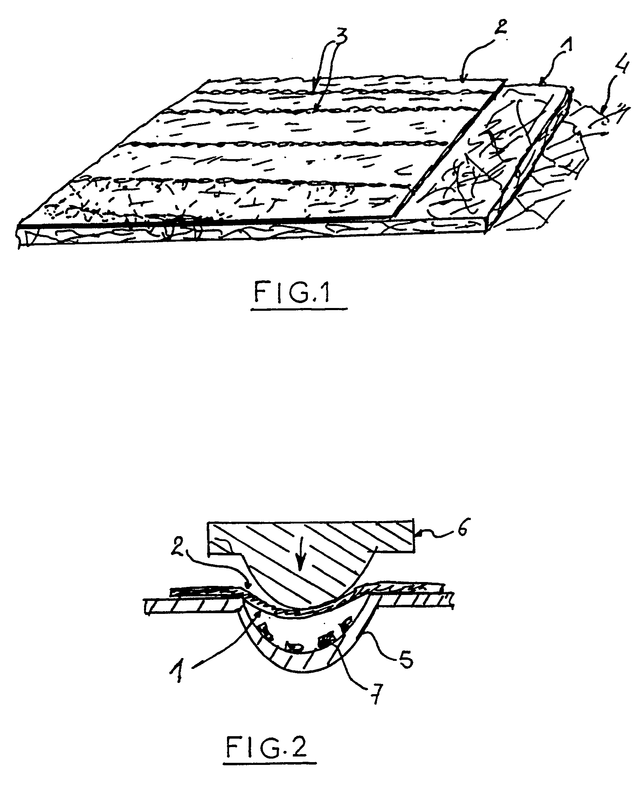

Si on se reporte à la figure 1 annexée, le matériau conforme à l'invention est constitué, dans sa forme la plus simple, d'un complexe comportant un mat (1) de fibres discontinues (ou continues) tel que par exemple un mat de fibres de verre, ce mat étant associé sur l'une de ses faces à un tricot jersey (2), ces deux éléments étant liés entre eux par couture-tricotage. La couture-tricotage est réalisée dans le matériau conforme à l'invention de telle sorte que les jetées sur une aiguille (colonnes de mailles) référencées (3) se trouvent situées du côté du jersey (2) alors que les jetées "sous" (4) reliant lesdites colonnes sont, quant à elles, disposées en surface de la nappe textile non tissée (1). Une telle configuration favorise lors de l'utilisation la déformation du complexe et, par ailleurs, assure un maintien parfait des fibres de la nappe non tissée, notamment lorsque ces dernières ne sont pas liées. La liaison par couture-tricotage est réalisée de manière connue.

Un tel matériau est particulièrement adapté pour réaliser des pièces stratifiées par emboutissage ainsi que cela est illustré à la figure 2. Dans une telle technique, le moule comporte une matrice (5) et un poinçon (6). Lors du moulage, le matériau est disposé de telle sorte que la face jersey (2) soit située du côté poinçon (6). On a constaté qu'en procédant de cette manière, on favorisait l'emboutissage et que l'on obtenait des articles très homogènes. Pour d'autres applications, il pourrait cependant être envisagé d'inverser le positionnement du matériau à l'intérieur du moule, mais le mode de réalisation précité est cependant préférentiel lorsque l'on souhaite obtenir des articles emboutis du type "casque".

Exemple :

Sur un métier conventionnel de couture-tricotage, on réalise un matériau conforme à l'invention et qui est illustré par la figure 1.

On utilise comme éléments de base rentrant dans la composition d'un tel matériau :

— comme nappe non tissée (1), un mat de verre pesant 800 grammes/mètre carré, obtenu par découpe de fibres de verre et nappage conventionnel par voie sèche ; de préférence, les fibres de verre sont coupées à une longueur relativement importante de l'ordre de 110 millimètres ;

— comme tricot jersey (2), un tricot réalisé sur un métier circulaire, à base de fils de polyester et pesant environ 100 grammes/mètre carré.

Ces deux éléments sont réunis de manière connue par couture-tricotage sur un métier du type Malimo, les fils de liage étant des fils de polyester. Le poids de fils de liage pour l'ensemble de l'article est d'environ dix grammes/mètre carré.

A partir d'un tel matériau, on réalise un casque de la manière illustrée à la figure 2 en prenant soin de disposer la partie jersey en regard du poinçon (6).

Le moulage s'effectue de manière conventionnelle, la résine étant par exemple déposée au moyen d'un "compound" (7) (mélange de résine et de fibres) disposé préalablement à l'intérieur du moule (5).

On a constaté qu'en procédant de cette manière, on obtenait un article embouti présentant une très grande homogénéité, le mat ne se déchirant pas et la répartition des fibres de verre restant uniforme, ce qu'il n'était pas possible d'obtenir avec les complexes antérieurs constitués d'un mat et d'un tissu chaîne et trame ou d'un mat seul.

Bien entendu, l'invention n'est pas limitée à l'exemple de réalisation donné précédemment mais elle en couvre toutes les variantes réalisées dans le même esprit.

Ainsi, un tel matériau pourrait être réalisé dans d'autres applications que le renforcement de résine, par exemple comme support d'enductions diverses.

De plus, préalablement à l'opération de moulage, il pourrait être envisagé de soumettre le complexe à un traitement additionnel, tel que par exemple un traitement d'enchevêtrement sous l'action de jets de fluide (air, eau..).

En outre, il pourrait être envisagé d'associer le mat non tissé avec d'autres éléments, par exemple un renfort additionnel constitué de fils longitudinaux transversaux, voire même de grilles non tissées.

Enfin, si les fils de liage sont de préférence constitués dans la même matière que celle entrant dans la réalisation du tricot déformable, il pourrait être envisagé d'utiliser d'autres types de fils de liage.

## Revendications

1. Armature textile pour la réalisation d'articles stratifiés du type constitué par au moins une nappe de fibres (1) disposées au hasard les unes par rapport aux autres, associée à une structure textile ordonnée (2), ces deux éléments (1,2) étant liés entre eux par couture-tricotage caractérisé en ce que :

— la nappe textile (2) à base de fils ordonnés est constituée par un tricot déformable ;

— le liage est réalisé de telle sorte que les jetées sur une aiguille (3) soient réalisées du côté du tricot (2) alors que les jetées sous plusieurs aiguilles (4) sont, quant à elles, réalisés côté nappe fibreuse (1).

2. Armature textile selon la revendication 1, caractérisée en ce que le tricot (2) est un tricot jersey réalisé sur un métier à mailles jetées ou à mailles cueillies.

3. Armature textile selon l'une des revendications 1 et 2, caractérisé en ce que le non-tissé (1) est en fibres de verre et le tricot (2) ainsi que les fils de liage sont des fils synthétiques, tels que des fils polyester ou polyamide.

4. Article stratifié embouti comportant un matériau selon l'une des revendications 1 à 3, caractérisé en ce que, lors de leur réalisation, la face du tricot (2) (jersey) est disposée du côté poinçon (6) du moule, de telle sorte que dans le stratifié terminé, cet élément se trouve situé du côté concave.

## Patentansprüche

1. Textile Verstärkung zur Herstellung von Schichtstoffen, gebildet aus zumindest einer Lage (1) an untereinander ungeordneten Fasern, die mit einer geordneten textilen Lage (2) in Verbindung steht, wobei die beiden Lagen (1, 2) durch Näh-Stricken untereinander verbunden sind, dadurch gekennzeichnet, daß

— die textile Lage (2) auf der Basis von geordneten Fäden durch ein verformbares Strickgewebe gebildet ist ;

— die Verbindung derart bewerkstelligt ist, daß die Umschläge (3) über einer Nadel auf Seiten des Strickgewebes (2) bewerkstelligt sind, wohingegen die Umschläge (4) unter zahlreichen Nadeln, was diese betrifft, auf Seiten der Lage aus Fasern bewerkstelligt sind.

2. Textile Verstärkung nach Anspruch 1, dadurch gekennzeichnet, daß das Strickgewebe eine Rechts-Links-Ware ist, die auf einer Strickmaschine mit Umschlagmaschen oder Fangmaschen hergestellt ist.

3. Textile Verstärkung nach Anspruch 1 oder 2, dadurch gekennzeichnet, daß das Faservlies (1) aus Glasfasern besteht, und daß das Strickgewebe (2) sowie die Verbindungsfäden aus synthetischen Fäden, wie Polyester- oder Polyamidfäden bestehen.

4. Geformter Schichtstoff, enthaltend ein Material nach einem der Ansprüche 1 bis 3, dadurch gekennzeichnet, daß bei dessen Herstellung die Seite des Strickgewebes (2) (Rechts-Links-Ware) derart auf Seiten des Stempels (6) der Form angeordnet ist, daß beim endfertigen Schichtteil sich dieses auf der konkaven Seite befindet.

## Claims

1. A textile reinforcement for producing laminated articles of the type composed of at least one lap of fibers (1) arranged at random relative to one another, which is associated with an ordered textile structure (2), these two elements (1, 2) being joined to one another by sewing and knitting, <u>characterized</u> in that:
— the textile lap (2) based on ordered threads is composed of a deformable knitted fabric ;
— the joining is carried out in such a way that the lappings on one needle (3) are made on the same side as the fabric (2), whilst the lappings under several needles (4) are made on the same side as the fibrous lap (1).

2. A textile reinforcement as claimed in claim 1, characterized in that the fabric (2) is a jersey fabric made on a warp or weft knitting machine.

3. A textile reinforcement as claimed in one of claims 1 and 2, characterized in that the nonwoven (1) is composed of glass fibers, and the fabric (2) and the joining threads are synthetic threads, such as polyester or polyamide threads.

4. A deep-drawn laminated article possessing a material as claimed in one of claims 1 to 3, characterized in that, during its production, the face of the (jersey) fabric (2) is arranged on the same side as the die (6) of the mold, in such a way that, in the finished laminate, this element is located on the concave side.

FIG.1

FIG.2